# FASCICULE DE BREVET EUROPEEN

(11) **EP 2 512 830 B1**
(45) Date de publication et mention de la délivrance du brevet: **23.10.2013**
(21) Numéro de dépôt: 10794983.6
(22) Date de dépôt: 16.12.2010
(51) Int. Cl.: B60C 11/13

(54) **PNEU A PERFORMANCE DE ROULAGE AMELIOREE**
REIFEN MIT ERHÖHTER ROLLLEISTUNG
TIRE HAVING ENHANCED ROLLING PERFORMANCE

(30) Priorité: 17.12.2009 FR 0959096
(43) Date de publication de la demande: 24.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LE-HEN, François, F-63100 Clermont-Ferrand (FR)
(74) Mandataire: Diernaz, Christian
(86) Numéro de dépôt international: PCT/EP2010/069878
(87) Numéro de publication internationale: WO 2011/073312

(56) Documents cités:
- WO-A1-99/48707
- JP-A- 4 345 504
- US-A- 2 661 041

## Description

L'invention concerne les pneus pour véhicules automobile et plus particulièrement les bandes de roulement de ces pneus.

Un pneu pour véhicule de tourisme est pourvu d'une bande de roulement surmontant radialement vers l'extérieur une ceinture de sommet placée elle-même radialement à l'extérieur d'une armature. Cette bande de roulement assure le contact du pneu en roulage avec la route et doit permettre de diriger et arrêter le véhicule quelles que soient les conditions de roulage. Par temps de pluie, l'eau qui se trouve sur la chaussée doit pouvoir être évacuée afin que la bande de roulement reste effectivement en contact avec la route. À défaut de pouvoir évacuer cette eau, il se produit, à partir de certaines vitesses de roulage, un mécanisme de soulèvement du pneu par rapport à la route (phénomène d'aquaplaning) qui est défavorable sur le plan de la tenue de route et donc de la sécurité. Pour contrer cela, il est connu de prévoir des cavités et des rainures sur la bande de roulement du pneu qui permettent de diriger l'eau présente vers l'intérieur de ces cavités et rainures et d'évacuer l'eau dans les rainures vers l'extérieur de la surface de contact à la fois latéralement et longitudinalement.

Par latéralement ou transversalement, on entend ici une direction qui est parallèle à l'axe de rotation du pneu.

Par longitudinalement (ou circonférentiellement) sur la bande de roulement, on entend ici une direction perpendiculaire à la direction transversale et tangente à un cercle centré sur l'axe de rotation.

Par rainure transversale, on entend une rainure débouchant à une de ses extrémités axialement vers l'extérieur du pneu pour favoriser l'écoulement de liquide latéralement par rapport à la trajectoire suivie par un pneu lors du roulage sur route revêtue d'eau. Préférentiellement, une telle rainure est orientée selon une direction faisant avec l'axe de rotation du pneu un angle inférieur à 45 degrés.

Sur de fortes hauteur d'eau (par exemple au moins 2 mm) et lorsque la vitesse du véhicule est élevée, il a été constaté que le mécanisme d'écoulement pouvait être perturbé et conduire à des réductions de performances notamment en terme de sécurité comme la survenue du phénomène d'aquaplaning se traduisant notamment par une perte de contact avec la chaussée.

Le document FR2152907 montre un pneu qui, outre des rainures longitudinales, présente des cavités radiales dans la bande de roulement, ces cavités radiales, formées sur les parties axialement externes de la bande, étant prolongée par une cavité formée à l'intérieur de la bande et sortant sur les faces latérales externes de la bande. Le pneu décrit dans ce document présente, grâce à ces cavités radiales, une possibilité supplémentaire d'évacuation de l'eau sur la route. Toutefois, il a été constaté que le pneu devait encore être amélioré en roulage sur route revêtue d'eau afin d'assurer une tenue de route encore améliorée.
D'autres pneus sont connus des documents WO-A-9948707 et JP-A-04345504.

L'objet de l'invention est de proposer une bande de roulement ayant des rainures comportant au moins un dispositif améliorant la tenue de route des pneus pourvus avec cette bande de roulement notamment lors du roulage sur chaussée revêtue d'eau.

Le pneu selon l'invention est pourvu d'une bande de roulement ayant une surface de roulement destinée à venir en contact avec la route et des faces latérales coupant la surface de roulement selon deux arêtes de bord pour déterminer une largeur W de bande de roulement entre lesdites deux arêtes de bord. Cette bande de roulement est pourvue d'une pluralité de rainures de profondeur H et délimitées par des faces de matière distantes d'au moins une largeur égale à 2 mm ; ces rainures s'ouvrent sur la surface de roulement. Ces rainures délimitent entre elles ou avec les faces latérales de la bande des motifs ayant des faces de contact formant en partie la surface de roulement.

Cette bande de roulement comprend une pluralité de rainures transversales dont l'une au moins des faces en vis-à-vis est pourvue avec au moins une protubérance délimitée par une surface radialement externe (*extrados*) et par une surface radialement interne (*intrados*), la surface radialement externe étant plus proche de la surface de roulement que la surface radialement interne, ces surfaces se rejoignant aux points de la protubérance les plus éloignés dans la direction de la rainure. Cette bande de roulement est telle que chacune de ces surfaces radialement interne et externe a, dans un plan de coupe parallèle aux faces délimitant la rainure, un profil tel que la longueur du profil de la surface radialement externe est supérieure à la longueur du profil de la surface radialement interne.

Les protubérances profilées formées dans une rainure n'assurent pas un lien mécanique bilatéral entre les faces en vis-à-vis délimitant ladite rainure mais uniquement un lien unilatéral, c'est-à-dire qu'elles limitent voire empêchent uniquement le rapprochement des faces en vis-à-vis. Par lien bilatéral, on entend un lien qui limite et empêche à la fois le rapprochement et l'écartement des faces en vis-à-vis.

En outre, l'extrémité axialement la plus à l'intérieur (c'est-à-dire l'extrémité la plus proche du plan équatorial) des rainures transversales pourvues d'au moins une protubérance est pourvue d'un dispositif de fermeture profilé. Ce dispositif de fermeture profilé comprend une surface de fermeture formé sur au moins une face délimitant la rainure et fermant au moins en partie la rainure, cette surface de fermeture ayant, vue en coupe dans un plan de coupe parallèle aux faces délimitant la rainure, un profil curviligne concave pour interagir avec la au moins une protubérance formée dans la rainure. Par profil curviligne concave, on entend une surface dont le centre de courbure est localisé axialement vers l'extérieur de la bande. Avantageusement, ce dispositif de fermeture ferme totalement ou en quasi-totalité la rainure (c'est-à-dire au moins 80% de la surface de section de la rainure est fermée par le dispositif).

La bande de roulement de l'invention permet, tout en maintenant une bonne évacuation de l'eau, d'augmenter l'appui de ladite bande sur la route lors d'un roulage par temps de pluie grâce précisément à la circulation de l'eau autour de chaque protubérance placée dans au moins une rainure. En effet, ces protubérances présentent un extrados et un intrados appropriés pour créer un effet de portance inversé se traduisant par une augmentation de l'effort de contact entre le pneu et la route lequel s'oppose à l'effet de la pression hydrodynamique lors du roulage sur l'eau tendant à écarter la bande de roulement de la route.

Ce dispositif de fermeture combiné à la protubérance formée dans une rainure transversale accroît l'effet d'écoulement de l'eau et en conséquence l'effet de portance du pneu sur le sol lors d'un roulage par temps de pluie.

Avantageusement, la protubérance s'étend sur toute ou quasiment toute la largeur de la rainure dans laquelle elle est réalisée de manière à bénéficier de la totalité du flux d'eau passant dans la rainure lors du roulage par temps de pluie. Par quasiment toute la largeur de la rainure, on entend ici sur au moins 90% de ladite largeur de la rainure.

Afin de faciliter la fabrication d'une telle bande selon l'invention par moulage, il est préférable de pourvoir chaque face délimitant une rainure avec une demi protubérance, ces demi protubérances se faisant face de manière à n'être séparée après démoulage que par une fente fine voire même une fente sans largeur, lesdites deux demi protubérances étant en contact l'une contre l'autre lorsque la rainure qui les contient passe dans le contact avec la route.

Avantageusement cette fente mince comprend des moyens pour limiter voire bloquer complètement les mouvements relatifs d'une demi protubérance par rapport à l'autre ; ces moyens peuvent être une forme en zigzag ou encore des reliefs formés sur les faces en vis-à-vis de la fente, ces reliefs coopérant entre eux pour réduire les mouvements relatifs.

Selon l'invention, les rainures pourvues de protubérances telles que décrites précédemment sont orientées transversalement, c'est-à-dire dans une direction faisant un angle inférieur à 45 degrés par rapport à une direction parallèle à l'axe de rotation du pneu

Avantageusement, le dispositif de fermeture est formé par deux demi dispositifs, chaque demi dispositif étant porté par une face délimitant la rainure, ces deux demi dispositifs étant prévus pour coopérer par contact entre eux lors du passage dans le contact avec la chaussée. De façon préférentielle, les deux demi dispositifs sont séparés par une fente fine pouvant comporter des moyens limitant les déplacements relatifs entre lesdits demi dispositifs lorsqu'ils sont en contact l'un contre l'autre.

Pour faciliter la fabrication, il est possible de réaliser ce dispositif de fermeture profilé de manière à ce qu'il soit formé par deux demi dispositifs, chacun desdits demi dispositifs étant formé sur une face délimitant la rainure, ces demi dispositifs étant soit en contact l'un contre l'autre soit séparés l'un de l'autre par une fente fine (de largeur inférieure à 1 mm). Cette fente fine peut être pourvue de moyen de blocage se présentant sous la forme de zigzags ou de reliefs.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une rainure transversale d'une bande de roulement selon l'invention ;

La figure 2 montre une coupe selon la ligne II-II prise sur la figure 1 ;

la figure 3 montre la même vue que la figure 2 avec des lignes d'écoulement de l'eau dans la rainure ;

la figure 4 montre une vue en coupe d'une variante de rainure transversale comportant deux protubérances profilées ;

la figure 5 montre une vue en coupe d'une variante de protubérance profilée ;

la figure 6 montre une variante d'une rainure comprenant une protubérance profilée, cette protubérance étant portée par une face de la rainure et pouvant venir en contact avec l'autre face de la rainure.

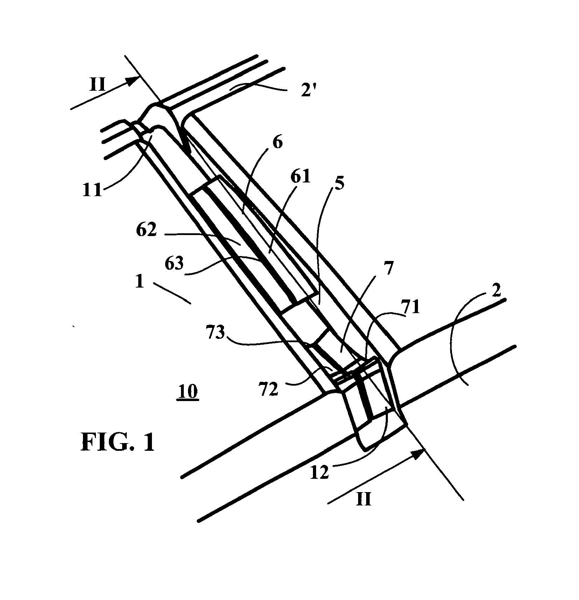

La figure 1 montre une variante d'une bande de roulement 1 selon l'invention est destinée à un pneu de dimension 205/55 R16. Cette bande comprend une pluralité de rainures transversales 5 de largeur égale à 3mm et de profondeur égale à 7 mm, ces rainures transversales s'ouvrant axialement sur les bords de ladite bande par une extrémité 11 axialement à l'extérieur. Cette extrémité 11 débouche dans une rainure circonférentielle de bord 2' de petite largeur. Cette petite rainure circonférentielle servant de région d'articulation entre l'extrémité de la bande de roulement et la partie des flancs du pneu. La rainure transversale 5 est prolongée jusqu'à une deuxième extrémité 12 débouchant dans une rainure circonférentielle 2. Cette rainure 5 comprend une protubérance profilée 6 formée de deux demi protubérances 61, 62 séparées par une fente mince 63 de largeur appropriée pour se fermer dans le contact du pneu avec la chaussée. Cette protubérance profilée a une longueur maximale égale à 8 mm ; elle est située à environ 1 mm sous la surface de roulement 10 à l'état neuf (c'est-à-dire avant tout roulage).

En outre, la rainure transversale 5 comprend à son extrémité 12 s'ouvrant dans la rainure circonférentielle 2 une deuxième protubérance 7 formant un dispositif de fermeture de la rainure transversale 5. Ce dispositif de fermeture est formé lui aussi de deux demi protubérances 71, 72, chaque demi protubérance étant portée par une face délimitant la rainure transversale 5. Ces demi protubérances du dispositif de fermeture sont séparées l'une de l'autre par une fente fine 73. Cette fente fine 73 formée entre les deux demi protubérances 71, 72 du dispositif de fermeture de la rainure transversale 5 a une largeur appropriée pour permettre un contact entre ces deux demi protubérances lors du roulage. Préférentiellement cette largeur est inférieur à 1 mm et encore plus préférentiellement inférieure à 0.6 mm.

Ce dispositif de fermeture 7 présente une surface courbe orientée de manière à avoir un centre de courbure positionné axialement vers l'extérieur de la bande de roulement et ainsi amplifier et favoriser le mécanisme d'écoulement de l'eau autour de la protubérance 6 pour générer une augmentation de pression de contact avec le sol.

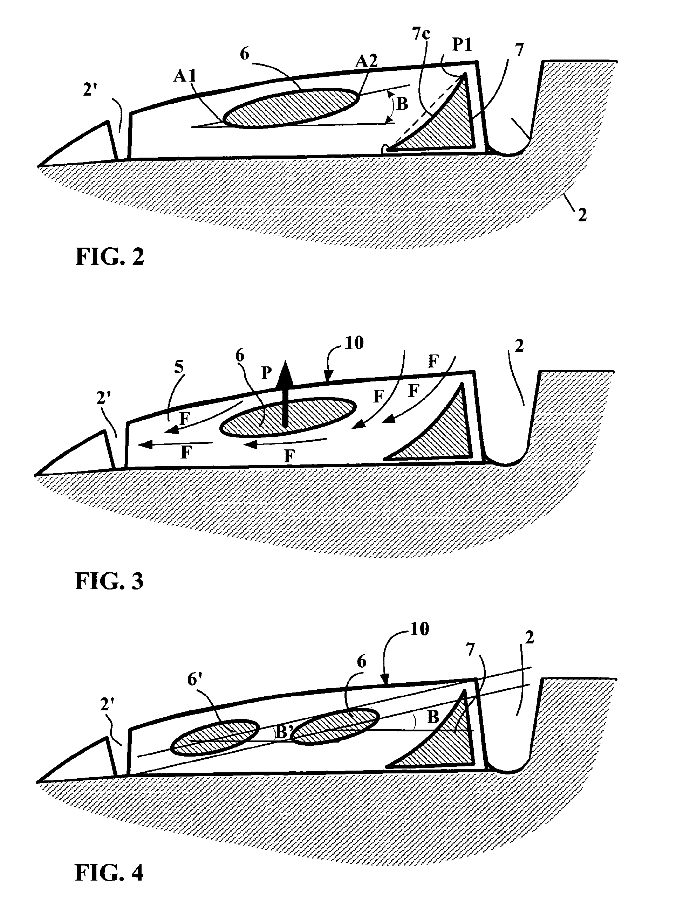

La figure 2 montre une coupe de la rainure montrée à la figure 1 et réalisée suivant une ligne II-II. Sur cette coupe, on distingue la géométrie du dispositif de fermeture 7 et notamment le profil courbe 7c de la surface de fermeture tel que sa concavité fait face à la protubérance profilée 6. Si on désigne par P1, P2 les points du dispositif de fermeture radialement et axialement les plus éloignés dudit dispositif, le profil courbe 7c est tel que le segment de droite (en pointillés sur la figure) joignant les points P1 et P2 ne coupe pas le dispositif en d'autres points. On voit aussi que de part et d'autre des points A1 et A2 axialement les plus éloignés sur la protubérance profilée 6, ladite protubérance profilée comprend un profil externe ayant une longueur supérieure à la longueur du profil interne de la même protubérance. Grâce à ce dispositif de fermeture 7, il est possible de réduire les effets de turbulence dans les écoulements à la croisée de la rainure circonférentielle et de chaque rainure transversale tout en améliorant l'écoulement dans les rainures transversales.

L'angle B du segment joignant les points A1 et A2 est ici différent de zéro degré et préférentiellement inférieur à 20 degrés (dans le cas présent cet angle est de 15 degrés).

Sur la figure 3, on montre la même représentation qu'à la figure 2, lors d'un roulage sur sol revêtu d'eau, le sol étant situé en haut de la figure. On a porté les lignes de flux d'eau F partant de la surface de contact 10 avec le sol et rentrant dans la rainure transversale 5 en allant axialement vers l'extérieur de la bande tout en circulant autour de la protubérance profilée 6. Cette circulation forcée génère des forces de portance qui conduisent à une augmentation des pressions de contact du pneu sur le sol ; ces forces de portance sont représentées ici par leur résultante P.

La figure 4 montre une variante d'un pneu selon l'invention selon lequel une rainure transversale comprend un dispositif de fermeture 7 à une de ses extrémités et deux protubérances 6 et 6' profilées disposées axialement et radialement l'une par rapport à l'autre de manière à ne pas interférer l'une avec l'autre sur les flux de fluide. Ces protubérances sont chacune inclinée avec une direction parallèle à l'axe de rotation avec des angles B, B' égaux à 20 degrés. On peut prévoir que ces angles sont différents.

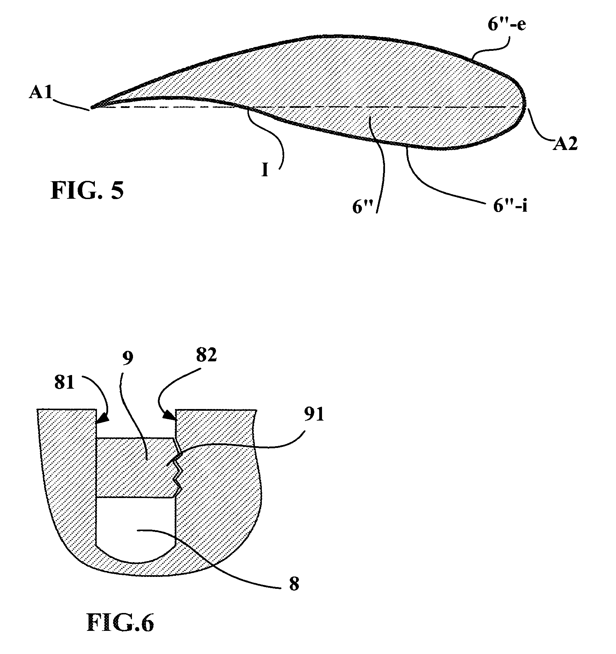

La figure 5 montre une variante de géométrie du contour d'une protubérance profilée 6" qui comprend, entre les points A1 et A2 dudit contour axialement les plus éloignés, un profil externe 6"-e et un profil interne 6"-i, le profil externe étant de longueur supérieure à la longueur du profil interne.

Le profil externe 6"-e est défini par des courbes géométriques ayant des courbures de même signe tandis que le profil interne est défini par deux parties ayant des courbures de signes opposés. Dans le cas présenté, le changement de courbure se fait à l'intersection I avec le segment joignant les points A1 et A2, mais bien sûr on pourrait positionner ce changement à tout autre endroit.

Grâce à cette disposition, il est possible de créer lors d'un roulage sur sol revêtu d'eau, un écoulement d'eau dont les lignes de flux autour des protubérances 3 génèrent des forces de pression hydrodynamiques qui contribuent à une augmentation de l'appui du pneu sur le sol. Ceci est particulièrement favorable par temps de pluie en augmentant les pressions de contact et donc en repoussant les limites d'aquaplaning notamment.

Pour la réalisation pratique, on peut usiner une lame dont l'épaisseur correspond à la largeur de la rainure à mouler, cette lame ayant deux faces qui sont creusées pour former deux cavités séparées l'une de l'autre par une épaisseur fine de la lame. Ces cavités sont destinées à mouler une demi protubérance et l'épaisseur fine de lame entre les deux cavités moulant une fente fine séparant les deux demi protubérances.

La figure 6 montre une autre variante d'une rainure 8 comprenant une protubérance 9, cette protubérance profilée 9 étant portée par une face 81 de la rainure. Cette protubérance est séparée de l'autre face 82 de la rainure par une fente mince 91. Pour limiter les possibilités de mouvements de la protubérance profilée par rapport à la face 82, cette fente 91 a une géométrie en zigzag.

L'invention n'est pas limitée aux exemples décrits et représentés et diverses modifications peuvent y être apportées sans sortir de son cadre tel que défini dans les revendications.

## Revendications

1. Pneu pourvu d'une bande de roulement (1) ayant une surface de roulement (10) destinée à venir en contact avec la route et des faces latérales coupant la surface de roulement selon deux arêtes de bord pour déterminer une largeur totale de bande de roulement entre lesdites deux arêtes de bord, cette bande de roulement étant pourvue de rainures de profondeur H s'ouvrant sur la surface de roulement et délimitées par des faces de matière distantes d'au moins une largeur égale à 2 mm, une pluralité de rainures (2) orientées transversalement, c'est-à-dire dans une direction faisant un angle inférieur à 45 degrés par rapport à l'axe de rotation du pneu, étant pourvues sur au moins une des faces en vis-à-vis les délimitant avec au moins une protubérance profilée (6), cette protubérance profilée étant délimitée par une surface radialement externe (31-e) et par une surface radialement interne (31-i), la surface radialement externe étant plus proche de la surface de roulement (10) que la surface radialement interne, ces surfaces externe et interne se rejoignant aux points (A1, A2) de la protubérance les plus éloignés dans la direction de la rainure, chacune de ces surfaces radialement interne et externe de chaque protubérance a, dans un plan de coupe parallèle aux faces délimitant la rainure, un profil tel que la longueur du profil de la surface radialement externe (31-e) est supérieure à la longueur du profil de la surface radialement interne (31-i) cette bande de roulement étant **caractérisée en ce que** les rainures transversales pourvues d'au moins une protubérance profilée (6) sont en outre pourvue d'une deuxième protubérance formant un dispositif de fermeture profilé (7), ce dispositif de fermeture profilé formé sur au moins une face délimitant la rainure et comprenant une surface de fermeture ayant, vue en coupe dans un plan de coupe parallèle aux faces délimitant la rainure, un profil curviligne concave, c'est-à-dire un profil dont le centre de courbure est localisé axialement vers l'extérieur de la bande.

2. Pneu selon la revendication 1 **caractérisé en ce que** la protubérance (3) s'étend sur au moins 90% de la largeur de la rainure (2) dans laquelle elle est réalisée de manière à bénéficier de la totalité du flux d'eau passant dans la rainure lors du roulage par temps de pluie

3. Pneu selon la revendication 1 ou la revendication 2 **caractérisé en ce que** les protubérances profilées (3) sont formées de deux demi protubérances (31, 32), chaque demi protubérance étant formée sur une des faces délimitant la rainure, ces demi protubérances se faisant face de manière à n'être séparée après démoulage que par une fente fine (4) voire même une fente sans largeur, lesdites deux demi protubérances étant en contact l'une contre l'autre lorsque la rainure qui les contient passe dans le contact avec la route.

4. Pneu selon la revendication 3 **caractérisé en ce que** la fente fine (4) comprend des moyens pour limiter voire bloquer complètement les mouvements relatifs d'une demi protubérance par rapport à l'autre.

5. Pneu selon la revendication 1 **caractérisé en ce que** le dispositif de fermeture (7) est formé par deux demi dispositifs (71, 72), chaque demi dispositif étant porté par une face délimitant la rainure, ces deux demi dispositifs étant prévus pour coopérer par contact entre eux lors du passage dans le contact avec la chaussée.

## Patentansprüche

1. Reifen, der mit einem Laufband (1) mit einer Lauffläche (10), die dazu bestimmt ist, mit der Straße in Kontakt zu kommen, und mit Seitenflächen versehen ist, die die Lauffläche entlang zweier Randkanten schneiden, um eine Gesamtbreite des Laufbandes zwischen den beiden Randkanten zu bestimmen, wobei dieses Laufband mit Rillen mit einer Tiefe H versehen ist, die sich auf der Lauffläche öffnen und durch Materialseiten begrenzt sind, die um mindestens eine Breite gleich 2 mm beabstandet sind, wobei eine Vielzahl von Rillen (2), die quer ausgerichtet sind, d.h. in eine Richtung, die einen Winkel kleiner als 45 Grad in Bezug zur Drehachse des Reifens bildet, auf mindestens einer der sie begrenzenden gegenüberliegenden Seiten mit mindestens einer profilierten Ausstülpung (6) versehen sind, wobei diese profilierte Ausstülpung durch eine radial äußere Fläche (31-e) und durch eine radial innere Fläche (31-i) begrenzt ist, wobei die radial äußere Fläche näher zur Lauffläche (10) ist als die radial innere Fläche, wobei diese äußere und innere Fläche an den Punkten (A1, A2) der Ausstülpung, die in Richtung der Rille am weitesten entfernt sind, verbunden sind, wobei jede dieser radial inneren und äußeren Flächen jeder Ausstülpung in einer Schnittebene parallel zu den die Rille begrenzenden Flächen ein derartiges Profil haben, dass die Länge des Profils der radial äußeren Fläche (31-e) größer als die Länge des Profils der radial inneren Fläche (31-i) ist, wobei dieses Laufband **dadurch gekennzeichnet ist, dass** die Querrillen, die mit mindestens einer profilierten Ausstülpung (6) versehen sind, ferner mit einer zweiten Ausstülpung versehen sind, die eine profilierte Verschlussvorrichtung (7) bildet, wobei diese profilierte Verschlussvorrichtung, die auf mindestens einer Fläche ausgebildet ist, die Rille begrenzt und eine Verschlussfläche umfasst, die im Schnitt gesehen in einer Schnittebene parallel zu den die Rille begrenzenden Flächen ein konkaves gekrümmtes Profil hat, d.h. ein Profil, dessen Krümmungsmittelpunkt axial nach außen zum Band angeordnet ist.

2. Reifen nach Anspruch 1, **dadurch gekennzeichnet, dass** sich die Ausstülpung (3) auf mindestens 90 % der Länge der Rille (2) erstreckt, in der sie ausgeführt ist, um die Gesamtheit des Wasserstroms, der in der Rille fließt, beim Fahren bei Regen zu nutzen.

3. Reifen nach Anspruch 1 oder Anspruch 2, **dadurch gekennzeichnet, dass** die profilierten Ausstülpungen (3) von zwei halben Ausstülpungen (31, 32) gebildet sind, wobei jede halbe Ausstülpung auf einer der Flächen, die die Rille begrenzen, ausgebildet ist, wobei diese halben Ausstülpungen einander gegenüberliegen, um nach dem Entformen nur durch einen feinen Schlitz (4) oder auch einen Schlitz ohne Breite getrennt zu sein, wobei die beiden halben Ausstülpungen miteinander in Kontakt sind, wenn die Rille, die sie enthält, mit der Straße in Kontakt kommt.

4. Reifen nach Anspruch 3, **dadurch gekennzeichnet, dass** der feine Schlitz (4) Mittel umfasst, um die relativen Bewegungen einer halben Ausstülpung in Bezug zur anderen zu begrenzen oder völlig zu blockieren.

5. Reifen nach Anspruch 1, **dadurch gekennzeichnet, dass** die Verschlussvorrichtung (7) von zwei halben Vorrichtungen (71, 72) gebildet ist, wobei jede halbe Vorrichtung von einer Fläche getragen wird, die die Rille begrenzt, wobei diese beiden halben Vorrichtungen dazu vorgesehen sind, durch Kontakt miteinander bei der Kontaktaufnahme mit der Straße zusammenzuwirken.

## Claims

1. Tyre provided with a tread (1) having a tread surface (10) intended to come into contact with the road and lateral faces intersecting the tread surface at two corner edges to determine a total width of tread between the said two corner edges, this tread being provided with grooves of depth H opening onto the tread surface and delimited by faces of material which are distant by at least a width equal to 2 mm, a plurality of grooves (2) oriented transversely, which means in a direction making an angle less than 45 degrees with respect to the axis of rotation of the tyre, being provided on at least one of the opposing faces that delimit them with at least one profiled protrusion (6), this profiled protrusion being delimited by a radially external surface (31-e) and by a radially internal surface (31-i), the radially external surface being closer to the tread surface (10) than the radially internal surface, these external and internal surfaces meeting at those points (A1, A2) of the protrusion that are furthest away in the direction of the groove, each of these radially internal and external surfaces of each protrusion has, in a plane of section parallel to the faces delimiting the groove, a profile such that the length of the profile of the radially external surface (31-e) is greater than the length of the profile of the radially internal surface (31-i), this tread being **characterized in that** the transverse grooves provided with at least one profiled protrusion (6) are further provided with a profiled closure device (7), this profiled closure device formed on at least one face delimiting the groove and comprising a closure surface having, viewed in cross section in a plane of section parallel to the faces delimiting the groove, a concave curved profile, which means a profile the centre of curvature of which is located axially towards the outside of the tread.

2. Tyre according to Claim 1, **characterized in that** the protrusion (3) extends over at least 90% of the width of the groove (2) in which it is made so as to enjoy all of the flow of water passing through the groove when being run in rainy weather.

3. Tyre according to Claim 1 or Claim 2, **characterized in that** the profiled protrusions (3) are formed of two half-protrusions (31, 32), each half-protrusion being formed on one of the faces delimiting the groove, these half-protrusions facing one another in such a way as to be separated, after demoulding, by only a thin slit (4) or even a slit of no width, the said two half-protrusions being in contact with one another when the groove that contains them comes into contact with the road.

4. Tyre according to Claim 3, **characterized in that** the thin slit (4) comprises means for limiting or even completely blocking relative movements of one half-protrusion with respect to the other.

5. Tyre according to Claim 1, **characterized in that** the closure device (7) is formed of two half-devices (71, 72), each half-device being carried by one face delimiting the groove, these two half-devices being designed to collaborate by mutual contact as they come into contact with the road surface.
